# EUROPÄISCHE PATENTSCHRIFT

(11) **EP 1 692 203 B1**
(45) Veröffentlichungstag und Bekanntmachung des Hinweises auf die Patenterteilung: **11.01.2012**
(21) Anmeldenummer: 04803311.2
(22) Anmeldetag: 27.11.2004
(51) Int. Cl.: C08G 18/72, C08G 18/08

(54) **VERFAHREN ZUR UMSETZUNG VON (I) THERMOPLASTISCHEN POLYURETHANEN MIT (II) ISOCYANATGRUPPEN AUFWEISENDEN VERBINDUNGEN**
METHOD FOR REACTING THERMOPLASTIC POLYURETHANES (I) WITH COMPOUNDS CONTAINING ISOCYANATE GROUPS (II)
PROCEDE POUR FAIRE REAGIR DES POLYURETHANNES THERMOPLASTIQUES (I) AVEC DES COMPOSES (II) PRESENTANT DES GROUPES ISOCYANATE

(30) Priorität: 01.12.2003 DE 10356610
(43) Veröffentlichungstag der Anmeldung: 23.08.2006
(73) Patentinhaber: BASF SE, 67056 Ludwigshafen (DE)
(72) Erfinder: HILMER, Klaus, 49448 Brockum (DE); HENZE, Oliver, Steffen, 39435 Schneidlingen (DE); PETERS, Sabine, 49638 Nortrup (DE); MALZ, Hanke, 49356 Diepholz (DE)
(86) Internationale Anmeldenummer: PCT/EP2004/013474
(87) Internationale Veröffentlichungsnummer: WO 2005/054322

(56) Entgegenhaltungen:
- EP-A- 0 417 581
- WO-A-03/035711
- DE-A1- 2 501 987
- DE-A1- 4 115 508
- DE-A1- 4 412 329

## Beschreibung

Die Erfindung betrifft Verfahren zur Umsetzung von (i) thermoplastischen Polyurethanen mit (ii) Isocyanatgruppen aufweisenden Verbindungen. Des weiteren bezieht sich die Erfindung auf Polyisocyanat-Polyadditionsprodukte, insbesondere Fasern, Schläuche, Kabelmäntel, Profile, Formkörper und Folien, die durch das erfindungsgemäße Verfahren erhältlich sind.

Die Herstellung von thermoplastischen Polyurethanen, die im Folgenden auch als TPU abgekürzt werden, ist allgemein bekannt.

TPU sind teilkristalline Werkstoffe und gehören zu der Klasse der thermoplastischen Elastomere. Charakteristisch für Polyurethan-Elastomere ist der segmentierte Aufbau der Makromoleküle. Aufgrund der unterschiedlichen Kohäsionsenergiedichten dieser Segmente erfolgt im idealen Fall eine Phasentrennung in kristalline "harte" und amorphe "weiche" Bereiche. Die resultierende Zweiphasenstruktur bestimmt das Eigenschaftsprofil von TPU.

Zur Verbesserung des Eigenschaftsprofils von TPU ist es aus der Literatur bekannt, Vernetzung in das TPU einzuführen, die dazu führen, dass die Festigkeiten erhöht, die Wärmestandfestigkeit verbessert, Zug- und Druckverformungsrest verringert, Beständigkeiten gegen Medien aller Art, Rückstellvermögen und Kriechverhalten verbessert werden.

Als Verfahren zur Vernetzung sind u.a. UV- oder Elektronenstrahlvernetzung, Vernetzung über Siloxangruppen und die Ausbildung von Vernetzungen durch Zugabe von Isocyanaten zum geschmolzenen TPU bekannt. Die Umsetzung eines TPU bevorzugt in geschmolzenem Zustand mit Isocyanatgruppen aufweisenden Verbindungen wird auch als Prepolymervernetzung bezeichnet und ist allgemein aus US 42 61 946, US 43 47 338, DE-A 41 15 508, DE-A 4 412 329, EP-A 922 719, GB 2347933, US 61 42 189, EP-A 1 158 011 bekannt. Trotz dieser allgemeinen Kenntnis über die Möglichkeiten der Prepolymervernetzung konnte sich dieses Verfahren bislang in der Praxis nicht durchsetzen. Gründe hierfür liegen unter anderem in der schwierigen apparativen Ausgestaltung. Das möglichst homogene Vermischen des üblicherweise als Granulat vorliegenden TPU mit den flüssigen oder zähflüssigen Isocyanatgruppen aufweisenden Verbindungen führt in der Praxis zu erheblichen Schwierigkeiten. Zum anderen stellt auch die Umsetzung des TPU mit den Isocyanatgruppen aufweisenden Verbindungen eine schwierige chemische Aufgabe dar, da das Vermischen des geschmolzenen TPU mit dem Prepolymer üblicherweise in einem Extruder durchgeführt wird, der bei einer zu schnellen oder zu dichten Vernetzung insbesondere mit höherfunktionellen Isocyanaten oder aufgrund des Molekulargewichtsaufbaus aufgrund der daraus resultieren Aushärtung schnell verstopfen kann. Andererseits wird eine möglichst ausgeprägte Vernetzung angestrebt.

Die Aufgabe der vorliegenden Erfindung bestand darin, die chemischen Komponenten derart zu optimieren, dass bei sehr guter Prozesssicherheit eine möglichst ausgeprägte Vernetzung erreicht werden kann.

Diese Aufgabe konnte dadurch gelöst werden, dass man als (ii) Isocyanatgruppen aufweisende Verbindungen (iia) Verbindungen mit mindestens drei, bevorzugt drei Isocyanatgruppen auf der Basis von aliphatischen Isocyanaten, bevorzugt Hexamethylendiisocyanat (HDI) und/oder 1-Isocyanato-3,3,5-trimethyl-5-isocyanatomethylcyclohexan (Isophoron-diisocyanat, IPDI), besonders bevorzugt Hexamethylendiisocyanat (HDI), und (iib) Verbindungen mit zwei Isocyanatgruppen auf der Basis von aromatischen Isocyanaten, bevorzugt 2,2'-, 2,4'- und/oder 4,4'-Diphenylmethandiisocyanat (MDI), besonders bevorzugt 4,4'-Diphenylmethandiisocyanat einsetzt.

Durch diese erfindungsgemäße Zusammensetzung, bevorzugt Mischung von (ii) enthaltend (iia) und (iib) werden durch den Einsatz dreifunktioneller Isocyanate (iia) Vernetzungspunkte schon in der Schmelze eingeführt, die nicht erst bei einem anschließenden Tempern/Lagern ausgebildet werden müssen. Dies führt zu einer quantitativeren Ausbildung von Vernetzungen im Verfahrensprodukt bevorzugt über Urethanstrukturen, die im Vergleich zu Allophanatvernetzungen stabiler sind. Der Einsatz dieser dreifunktionellen Isocyanate (iia) alleine ist üblicherweise mit deutlichen Nachteilen verbunden, da diese zu einer Vernetzung unter gleichzeitigem Molekulargewichtsaufbau führen und damit Verstopfung des Extruders führen. Eine ausreichende Prozesssicherheit kann somit nur schwierig erreicht werden. Durch den besonders bevorzugten Einsatz von den difunktionellen Verbindungen (iib) und dem damit verbundenen Molekulargewichtsabbau der Schmelze kann eine sichere und wirtschaftliche Verfahrensführung ermöglicht werden. Dies gilt umso mehr, da (iia) auf aliphatischen Isocyanaten basiert, d.h. dass es sich bei den Isocyanatgruppen von (iia) um aliphatische Isocyanatgruppen handelt. Diese Isocyanatgruppen sind deutlich weniger reaktiv beispielsweise gegenüber Hydroxylgruppen als aromatische Isocyanatgruppen. Da die difunktionellen, d.h. zwei Isocyanatgruppen aufweisenden Verbindungen (iib) aromatische Isocyanatgruppen aufweisen, reagiert (iib) deutlich schneller mit dem TPU als (iia), so dass es trotz der Vernetzung über Urethanbindungen des Triisocyanats zu keinem oder nur geringem Molekulargewichtsaufbau kommt. Eine Verstopfung im Extruder oder in der Spritzgussapparatur wird somit durch (iib) zurückgedrängt und vermieden.

Überraschend wurde gefunden, dass die Zudosierung von Triisocyanaten und Diisocyanaten zu einer ausgezeichneten Schmelzestabilität führt. Dabei kann über die Zudosierung von MDI in geringen Mengen über das Molekulargewicht des TPU die Schmelzestabilität verbessert werden.

Als (iia) setzt man bevorzugt ein Isocyanurat mit drei Isocyanatgruppen ein, bevorzugt ein Isocyanurat auf der Basis von HDI, d.h. ein trimerisiertes HDI, bei dem drei HDI eine Isocyanuratstruktur ausbilden und drei freie Isocyanatgruppen vorliegen. Besonders bevorzugt setzt man als (iia) ein Isocyanurat mit einem NCO-Gehalt zwischen 20 % und 25 %, bevorzugt zwischen 21,5 % und 22,5 % und einer Viskosität bei 23°C zwischen 2500 mPas und 4000 mPas ein.

Als (iib) setzt man bevorzugt 2,2'-, 2,4'- und/oder 4,4'-Diphenylmethandiisocyanat (MDI), ein Carbodiimid-modifiziertes MDI und/oder ein Prepolymer auf der Basis von MDI ein. Besonders bevorzugt ist als (iib) ein Prepolymer auf der Basis von 2,2'-, 2,4'-und/oder 4,4'-Diphenylmethandiisocyanat (MDI), Alkandiol, bevorzugt Dipropylenglykol, mit einem Molekulargewicht zwischen 60 g/mol und 400 g/mol und Polyetherdiol, bevorzugt Polypropylenglykolether, mit einem Molekulargewicht zwischen 500 g/mol und 4000 g/mol. Besonders bevorzugt ist ein Prepolymer als (iib) mit einer Viskosität bei 25°C zwischen 500 mPas und 800 mPas, bevorzugt zwischen 550 mPas und 770 mPas und einem NCO-Gehalt zwischen 20 % und 25 %, bevorzugt zwischen 22,4 % und 23,4 %.

Bevorzugt setzt man (iia) und (iib) in einem Gewichtsverhältnis von (iia): (iib) zwischen 1 : 1 und 1:10, bevorzugt zwischen 1 : 3 und 1 : 4 einsetzt.

Besonders bevorzugt führt man das Verfahren derart durch, dass man pro 100 Gew.-Teilen (i) thermoplastisches Polyurethan zwischen 1 und 10 Gew.-Teile, bevorzugt zwischen 2 und 6 Gew.-Teile (ii) Isocyanatgruppen aufweisende Verbindungen einsetzt.

Durch den Überschuss an Isocyanatgruppen durch die Zugabe von (ii) wird erreicht, dass diese Isocyanatgruppen während und/oder nach dem Mischen der Komponenten (i) und (ii) in kaltem oder warmen Zustand der Komponenten Vernetzungen in Form von beispielsweise Urethan-, Allophanat-, Uretdion-, und/oder Isocyanuratstrukturen sowie eventuell Harnstoff und Biuretbindungen ausbilden, die zu den verbesserten Eigenschaften der Polyisocyanat-Polyadditionsprodukte führen. Die Bildung der Vernetzungen kann gegebenenfalls durch Zugabe von Katalysatoren, die zu diesem Zweck allgemein bekannt sind, beispielsweise Alkaliacatate- und/oder formiate, gefördert werden. Außerdem erfolgt eine Vernetzung über freie gegenüber Isocyanaten reaktive Gruppen, z.B. Hydroxylgruppen oder primäre oder sekundäre Aminogruppen, insbesondere Hydroxylgruppen, des linearen TPU-Polymers. Diese reaktiven Gruppen können bereits in dem TPU-Granulat vorliegen, sie entstehen aber auch im Extruder in der TPU-Schmelze z.B. durch thermodynamische Spaltung des Polymerstranges unter Verarbeitungsbedingungen oder auch beim Lagern oder Tempern des Isocyanatreichen Materials.

Der vorliegenden Erfindung lag zudem die Aufgabe zugrunde, ein Verfahren zur Umsetzung von (i) thermoplastischen Polyurethanen mit (ii) Isocyanatgruppen, insbesondere enthaltend tri- und Polyisocyanate aufweisenden Verbindungen zu entwickeln, das hinsichtlich der apparativen Ausgestaltung eine sichere, schnelle und verlässliche Umsetzung ermöglicht. Dabei sollten Schwankungen in den Produkteigenschaften ebenso vermieden werden wie Durchsatzschwankungen mit resultierenden Maßschwankungen bei Extrudieren, Ablagerungen im Extruder bzw. in der Spritzgießmaschine, zu frühe Wirkung der Vernetzung über Triisocyanate mit stoppen der Förderung (verstopfen der Anlage).

Diese Aufgabe konnte dadurch gelöst werden, dass man (i) bevorzugt granuliertes thermoplastisches Polyurethan durch eine Einzugshilfe, d.h. eine förderwirksame Einzugszone, einem Extruder oder einer Spritzgussapparatur, bevorzugt einem Extruder zuführt und in dem Extruder oder der Spritzgussapparatur, bevorzugt in dem Extruder mit (ii) Isocyanatgruppen aufweisenden Verbindungen mischt und bevorzugt bereits im Extruder umsetzt.

Durch den bevorzugten Einsatz einer Einzugshilfe, durch die (i) und bevorzugt auch (ii) dem Extruder zugeführt werden, an dem Extruder oder an der Spritzgussapparatur gelingt es, dass feste TPU-Granulat zusammen oder getrennt, bevorzugt zusammen mit den bevorzugt bei 15°C flüssigen oder zähflüssigen, bevorzugt flüssigen (ii) Isocyanatgruppen aufweisenden Verbindungen in den Extruder oder die Spritzgussapparatur schnell und sicher einzuführen. Da über die Länge des Extruders üblicherweise der Druck der Schmelze steigt, wird man die (ii) Isocyanatgruppen aufweisenden Verbindungen bevorzugt an einer Stelle in den Extruder einführen, an der der Druck der Schmelze kleiner als 200 bar ist. Besonders bevorzugt wird man die (ii) Isocyanatgruppen aufweisenden Verbindungen zusammen mit (i) thermoplastischen Polyurethanen durch die Einzugshilfe dem Extruder oder der Spritzgussapparatur einführen, d.h. man verwendet dieselbe Einzughilfe für (i) und (ii).

Bei dem Extruder kann es sich um einem allgemein bekannten Extruder handeln, wie er beispielsweise zur Extrusion von TPU allgemein bekannt ist, z.B. einen Ein- oder bevorzugt Zweiwellenextruder, besonders bevorzugt Einwellenextruder mit Einzughilfe, insbesondere genuteten Einzughilfe. Allerdings führen die besonders bevorzugten Ausgestaltungen gemäß der vorliegenden Erfindung zu einer besonders effektiven und wirtschaftlichen Durchmischung und Umsetzung von (i) und (ii).

Einzugshilfen für Extruder sind dem Fachmann auf dem Gebiet der Extrusion allgemein bekannt und vielfach beschrieben. Bevorzugt handelt es sich bei der Einzugshilfe um eine genutete Einzugszone. Genutete Einzugshilfen, Nutbuchsenextruder oder Extruder mit genuteter Einzugszone genannt, sind dem Fachmann auf dem Gebiet der Extrudertechnik allgemein bekannt und vielfältig beschrieben, so z.B. in "Der Extruder im Extrusionsprozess - Grundlage für Qualität und Wirtschaftlichkeit", VDI-Verlag GmbH, Düsseldorf, 1989, ISBN 3-18-234141-3, Seiten 13 bis 27. Charakteristisch für eine genutete Einzugszone ist das Vorhandensein üblicherweise im wesentlichen parallel zur Längserstreckung der Schnecke in der Einzugszone des Extruders vorhandene Längsnuten in der Zylinderwand, die üblicherweise in Förderrichtung gesehen zum Ende der Einzugzone konisch auslaufen. Eindungsgemäß führen diese Nuten trotz der Zudosierung einer flüssigen Komponenten (ii) in den Extruder zu einer deutlich verbesserten axialen Förderung von (i) und (ii) durch die Schnecke im Extruder. Dieser deutliche Effekt war unerwartet, da der Fachmann erwarten musste, dass die flüssige oder zähfließende Komponente (ii) die Wirksamkeit der Nuten reduzieren oder aufheben würde.

Bevorzugt weisen die Nuten eine Tiefe auf, die zwischen 10 % und 90 % des mittleren Teilchendurchmessers von (i) beträgt, d.h. die Tiefe der Nuten ist deutlich kleiner als der mittlere Teilchendurchmesser des granulierten TPU (i). Besonders bevorzugt weisen die Nuten eine Tiefe zwischen 1 mm und 8 mm, bevorzugt zwischen 2 mm und 5 mm auf. Die genutete Einzugszone besitzt bevorzugt eine Länge zwischen dem 2-fachen und dem 4-fachen des Schneckendurchmessers. Bevorzugt weist die genutete Einzugszone zwischen 4 und 32, besonders bevorzugt zwischen 4 und 16 Nuten auf, die bevorzugt parallel oder spiralförmig, bevorzugt parallel zur Längsachse des Extruders verlaufen.

Als Schnecken könne allgemein bekannte Schnecken eingesetzt, z.B. 3- oder 5-Zonen Schnecken. Besondere Vorteile ergeben sich im vorliegenden Verfahren, wenn man einen Extruder einsetzt, der eine Barriereschnecke aufweist. Barriereschnecken sind in der Extrusion allgemein bekannt, z.B. aus "Der Extruder im Extrusionsprozess - Grundlage für Qualität und Wirtschaftlichkeit", VDI-Verlag GmbH, Düsseldorf, 1989, ISBN 3-18-234141-3, Seiten 107 bis 125, Seiten 139 bis 143. Unerwartet und für den Fachmann überraschend führen gerade Barriereschnecken bei der bevorzugten festflüssig-Dosierung insbesondere beim Vermischen und Umsetzen von (i) und (ii) zu besonderen Vorteilen, die darin liegen, dass das die flüssigen Komponenten schnell über den Barrieresteg in das Schmelzebett der Schnecke übertreten und dadurch selbst thermisch nicht geschädigt werden sowie das Aufschmelzen der Granulate nicht beeinflussen. Die Umsetzung von (i) und (ii) erfolgt dann bevorzugt ausgehend von sehr hohem Isocyanatgehalt langsam abfallend, da kontinuierlich Schmelze über die Barriere fließt. Dadurch wird der Prozess besonders gut kontrollierbar.

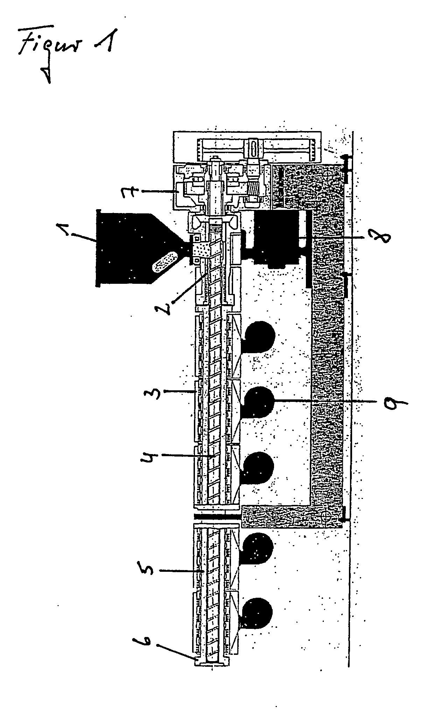

Ein beispielhafter Extruder ist in der Figur 1 dargestellt mit den folgenden Bedeutungen für die Abkürzungen:
1: Einfülltrichter
2: genutete Einzugzone
3: elektrische Heizung
4: Schnecke
5: Zylinder
6: Anschlussflansch
7: Getriebe
8: Antriebsmotor
9: Kühlgebläse.

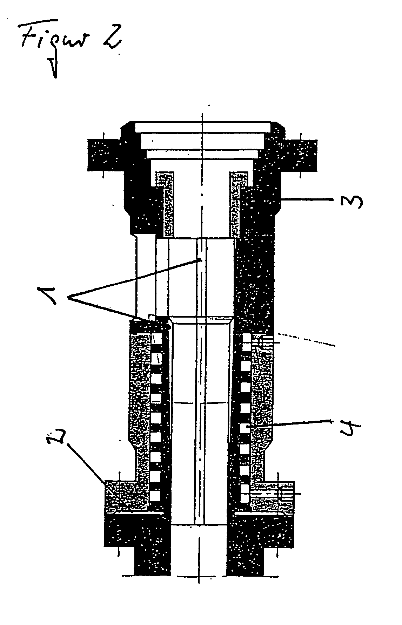

In der Figur 2 ist eine beispielhafte genutete Einzugzone dargestellt mit den folgenden Bedeutungen für die Abkürzungen:
1: Längsnut
2: Wärmetrennung
3: Dichtbuchse
4: Kühlung

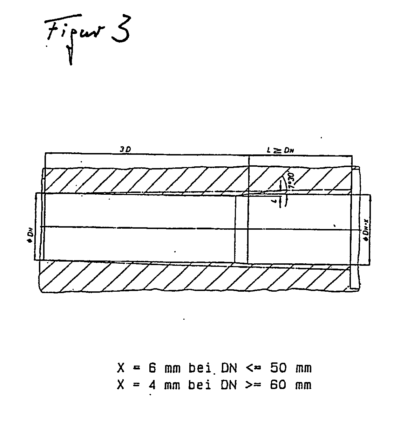

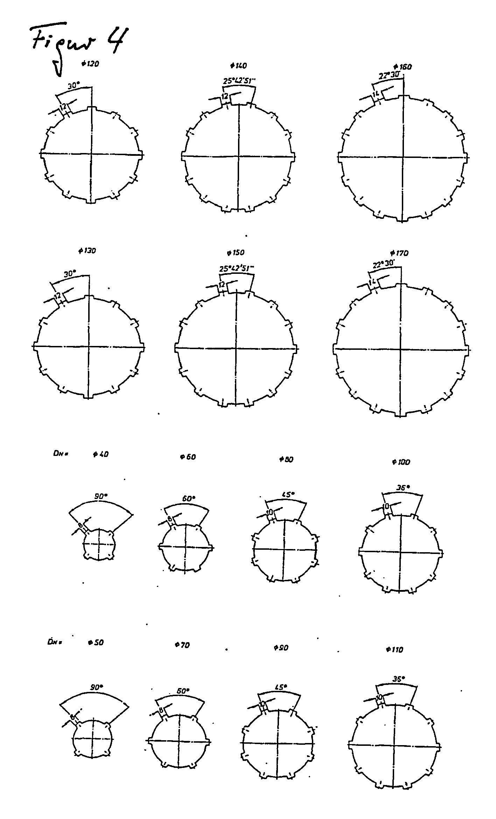

In der Figur 3 ist eine beispielhafte genutete Einzugzone im Längsschnitt, d.h. parallel zur Schnecke dargestellt, während in Figur 4 verschiedene beispielhafte genutete Einzugzonen im Querschnitt abgebildet sind. Dabei bedeuten:
DN: Nenndurchmesser
X: Aufweitung des Durchmessers.

Die Temperatur der Schmelze in dem Extruder oder in der Spritzgussapparatur, bevorzugt dem Extruder beträgt üblicherweise zwischen 150°C bis 240°C, bevorzugt zwischen 180°C bis 230°C.

Die Verweilzeit des TPU in dem Extruder beträgt bevorzugt zwischen 120 s und 600 s.

Das erfindungsgemäße Verfahrensprodukt kann nach allgemein bekannten Verfahren zu Formkörpern aller Art, Folien, Schläuchen, Kabelummantelungen, Spritzgussartikeln oder Fasern verarbeitet werden. Die Verarbeitungstemperatur bei der Herstellung der Folien, Formkörpern oder Fasern beträgt bevorzugt bis 150 bis 230°C, besonders bevorzugt 180 bis 220°C. Eine Verarbeitung der Mischung zu den gewünschten Folien, Formkörpern und/oder Fasern erfolgt bevorzugt direkt nach oder während dem Vermischen der Komponenten (i) und (ii), da eine thermoplastische Verarbeitung der Polyisocyanat-Polyadditionsprodukte zu Folien, Formkörpern oder Fasern bevorzugt vor und/oder während der Ausbildung der Vernetzungen durchgeführt wird.

Durch eine anschließende Temperung/Lagerung der Verfahrensprodukte aus der Extrusion, dem Spritzguss oder der Schmelzverspinnung, beispielsweise den Formkörpern, Folien oder Fasern, bei einer Temperatur von beispielsweise 120 bis 80°C für eine Dauer von üblicherweise mindestens 2 Stunden, bevorzugt 12 bis 48 Stunden können Allophanat- Uretdion- und/oder Isocyanuratvernetzungen evtl. durch Hydrolyse auch Harnstoffbindungen und Biurete durch die im Überschuss vorhandenen Isocyanatgruppen in den Polyisocyanat-Polyadditionsprodukten ausgebildet werden. Diese Vernetzungen führen zu den sehr vorteilhaften Eigenschaften der Produkte in Bezug auf die Temperaturstabilität und das Hystereseverhalten nach Belastung.

Als TPU können allgemein bekannte TPU eingesetzt werden. Die TPU können in dem erfindungsgemäßen Verfahren in üblicher Form, beispielsweise als Granulat oder Pellets, bevorzugt Granulat, eingesetzt werden. TPU sind allgemein bekannt und vielfältig beschrieben.

Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden. Im Folgenden sollen beispielhaft die Ausgangskomponenten und Verfahren zur Herstellung der bevorzugten TPU dargestellt werden. Die bei der Herstellung der TPU üblicherweise verwendeten Komponenten (a), (b) sowie gegebenenfalls (c), (e) und/oder (f) sollen im Folgenden beispielhaft beschrieben werden:
a) Als organische Isocyanate (a) können allgemein bekannte aliphatische, cycloaliphatische, araliphatische und/oder aromatische Isocyanate, bevorzugt Diisocyanate eingesetzt werden, beispielsweise Tri-, Tetra-, Penta-, Hexa-, Hepta-und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat und/oder 4,4'-, 2,4'- und 2,2'-Dicyclohexylmethandiisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man Polyetherpolyole ein, besonders bevorzugt solche Polyetherole auf Basis von Polyoxytetramethylenglykol. Die Polyetherole weisen den Vorteil auf, dass sie eine höhere Hydrolysestabilität als Polyesterole besitzen.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo-und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Weichmacher. Als Hydrolyseschutzmittel werden bevorzugt oligomere und/oder polymere aliphatische oder aromatische Carbodiimide verwendet.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001. Alle in dieser Schrift genannten Molekulargewichte weisen die Einheit [g/mol] auf. Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt. Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor. Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt. Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert oder beim Granulieren abgekühlt.

Die folgenden Isocyanatgruppen aufweisende Verbindungen wurden eingesetzt
(a) Lupranat® MP 102 (modifiziertes Diphenylmethandiisocyanat (MDI), BASF Aktiengesellschaft) und Basonat® HI 100 (Triisocyanat auf Basis von isocyanuratisiertem Hexamethylendiisocyanat (HDI), BASF Aktiengesellschaft) im Gewichtsverhältnis 4 : 1
(b) Lupranat® MP 102 (BASF Aktiengesellschaft) und Basonat® HI 100 (BASF Aktiengesellschaft) im Gewichtsverhältnis 2 : 1
(c) Lupranat® MP 102 (BASF Aktiengesellschaft) Die erhaltenen Mischungen und das reine Isocyanat konnten bei Raumtemperatur mit einer Zahnradpumpe gefördert werden.

### Beispiel 1

Verschiedene Mengen der Mischung (b) wurden in einem Extruder mit genuteter Einzugszone, I/D 25-32, und einer Barriere-Mischteil-Schnecke deren Einzugsbereich auf Nuten abgestimmt war, in ein Elastollan® E 1180A (TPU der Elastogran GmbH) zudosiert. Es wurden homogene Extrudate mit glatter Oberfläche erhalten.

### Beispiel 2

Die Proben aus Beispiel 1 (2-4g) wurden in DMF (50 ml) für 14 Stunden gerührt. Danach wurden für die Proben die löslichen Anteile bestimmt.

**Tabelle 1: Lösliche Anteile der in Bsp. 1 erhaltenen Materialien.**

| Zusatz an Isocyanat in Gewichtsprozent bezogen auf den Extruderausstoß | Temperung | Zusatz zum DMF | Lösliche Anteile (%) |
|---|---|---|---|
| 0 | 20h bei 100°C | Dibutylamin 1 % | 100 |
| 0 | 20h bei 100°C | | 100 |
| 0 | | Dibutylamin 1 % | 100 |
| 0 | | | 100 |
| 2,5 | 20h bei 100°C | Dibutylamin 1 % | 18 |
| 2,5 | 20h bei 100°C | | 2 |
| 2,5 | | Dibutylamin 1 % | 60 |
| 2,5 | | | 7 |
| 5 | 20h bei 100°C | Dibutylamin 1 % | 8 |
| 5 | 20h bei 100°C | | 1 |
| 5 | | Dibutylamin 1 % | 16 |
| 5 | | | 2 |

Aromatische Allophanatbindungen werden von DMF enthaltend Dibutylamin aufgelöst. Die geringe Löslichkeit der vernetzten TPU in DMF enthaltend 1% Dibutylamin zeigt, das hier die Vernetzung über eine beständigere Vernetzungsart, z.B. Urethanbindungen, erfolgte. Der Zusatz von 5% Isocyanat (b) ergab höhere Vernetzungsgrade als der Zusatz von 2,5%.

### Beispiel 3

Die Mischungen (a) und (b) sowie (c) wurden in einem Extruder mit genuteter Einzugszone, I/D 25-32, und einer Barriere-Mischteil-Schnecke deren Einzugsbereich auf Nuten abgestimmt war, in ein Elastollan® E 1180A zudosiert. Es wurden homogene Extrudate mit glatter Oberfläche erhalten.

### Beispiel 4

Die Proben aus Beispiel 3 (2-4g) wurden in DMF (50 ml) für 14 Stunden gerührt. Danach wurden für die Proben die löslichen Anteile bestimmt.

**Tabelle 2: Lösliche Anteile der in Bsp. 3 erhaltenen Materialien.**

| zugegebenes Isocyanat | Zusatz an Isocyanat in Gewichtsprozent bezogen auf den Extruderausstoß | Temperung | Zusatz zum DMF | Lösliche Anteile (%) |
|---|---|---|---|---|
| - | 0 | 20h bei 100°C | Dibutylamin 1 % | 100 |
| (b) | 2.5 | 20h bei 100°C | Dibutylamin 1 % | 8 |
| (a) | 2.5 | 20h bei 100°C | Dibutylamin 1 % | 54 |
| (b) | 4 | 20h bei 100°C | Dibutylamin 1 % | 1 |
| (a) | 4 | 20h blei 100°C | Dibutylamin 1 % | 33 |
| (c) | 4 | 20h bei 100°C | Dibutylamin 1 % | 100 |
| - | 0 | 20h bei 100°C | | 100 |
| (b) | 2.5 | 20h bei 100°C | | 2 |
| (a) | 2.5 | 20h bei 100°C | | 2 |
| (b) | 4 | 20h bei 100°C | | 2 |
| (a) | 4 | 20h bei 100°C | | 2 |
| (c) | 4 | 20h bei 100°C | | 40 |
| - | 0 | | Dibutylamin 1 % | 100 |
| (b) | 2.5 | | Dibutylamin 1 % | 88 |
| (a) | 2.5 | | Dibutylamin 1 % | 100 |
| (b) | 4 | | Dibutylamin 1 % | 15 |
| (a) | 4 | | Dibutylamin 1 % | 82 |
| (c) | 4 | | Dibutylamin 1 % | 100 |
| - | 0 | | | 100 |
| (b) | 2.5 | | | 15 |
| (a) | 2.5 | | | 7 |
| (b) | 4 | | | 3 |
| (a) | 4 | | | 3 |
| (c) | 4 | | | 45 |

Die Vernetzung mit dem Isocyanat (c) verlief über in DMF mit Dibutylamin lösliche Allophanate. Es ist bekannt, dass diese Allophanate reversibel bei Temperaturen oberhalb von 150-160°C gespalten werden können. Die Vernetzungspunkte erhalten durch Verwendung der Isocyanatmischungen (a) und (b) wurden von Dibutylamin nicht oder weniger angegriffen und waren deshalb stabiler als die mit dem Isocyanat (c) Die Vernetzung mit einer Mischung aus zwei und dreifunktionellem Isocyanat stellte deshalb eine qualitativ höhere Stufe der Vernetzung dar. Mit der Isocyanatmischung (b) wurde die stabilste Vernetzung erreicht, da diese Mischung den höchsten Anteil an trifunktionellem Isocyanat enthielt.

### Beispiel 5

Die Mischung (b) wurde in einem Extruder mit genuteter Einzugszone, I/D 25-32, und einer Barriere-Mischteil-Schnecke deren Einzugsbereich auf Nuten abgestimmt war, in ein Elastollan® E 1154D zudosiert. Es wurden homogene Extrudate mit glatter Oberfläche erhalten.

### Beispiel 6

Die Proben aus Beispiel 5 (2-4g) wurden in DMF (50 ml) für 14 Stunden gerührt. Danach wurden für die Proben die löslichen Anteile bestimmt.

**Tabelle 3: Lösliche Anteile der in Bsp. 5 erhaltenen Materialien.**

| Zugegebenes Isocyanat bezogen auf den Extruderausstoß | Zusatz an Isocyanat in Gewichtsprozent | Temperung | Zusatz zum DMF | Lösliche Anteile (%) |
|---|---|---|---|---|
| - | 0 | 20h bei 100°C | Dibutylamin 1% | 100 |
| (b) | 5 | 20h bei 100°C | Dibutylamin 1% | 23 |
| - | 0 | 20h bei 100°C | | 100 |
| (b) | 5 | 20h bei 100°C | | 2 |

TPU Materialien mit hoher Shore Härte können mit dem verwendeten Verfahren vernetzt werden.

### Beispiel 7

Die Mischung (b) wurde in einem Extruder mit genuteter Einzugszone, I/D 25-32, und einer Barriere-Mischteil-Schnecke deren Einzugsbereich auf Nuten abgestimmt war, in ein Elastollan® E 1180A zudosiert. Es wurden die Materialien 1 und 2 mit den in Tabelle 4 dargestellten Eigenschaften erhalten. Das vernetzte Material zeigte einen verbesserten Zugverformungsrest.

**Tabelle 4: Mechanische Eigenschaften der vernetzten Materialien (5% Isocyanat zudosiert) im Vergleich zum Standardmaterial (0% Isocyanat zudosiert).**

| | Zusatz an Isocyanat (b) in Gewichtsprozent bezogen auf den Extruderausstoß | Härte Shore A | Zugfestigkeit (MPa) | Reißdehnung (%) | Zugverformungsrest (%) |
|---|---|---|---|---|---|
| Material 1 | 0 | 80 | 44,9 | 549 | 35 |
| Material 2 | 5 | 82 | 33,3 | 353 | 12 |

### Beispiel 8

Die Proben gemäß Bsp. 7 wurden einem Hot Set Test unterzogen (an DIN EN 60811-2-1 angelehnt). Die Proben wurden bei 20 mm² Querschnitt bei 180°C mit einem Gewicht von 400g belastet.

**Tabelle 5: Hot Set Test angelehnt an DIN EN 60811-2-1.**

| | 1.Messung | 2.Messung |
|---|---|---|
| | % | % |
| Material 1 | abgerissen | abgerissen |
| Material 2 | 80 | 40 |

### Beispiel 9

Die Erweichungstemperatur der in Beispiel 8 erhaltenen Materialien wurde mit thermisch mechanischer Analyse (TMA) nach DIN ISO 11359 ermittelt (Messbedingungen: Heizrate 20K/min, Probengeometrie: Dicke 2 mm, Durchmesser 8 mm, Auflast: 0,5N mit 6mm Quarzplättchen). Die Lagerung eines Formteils bestehend aus Material 2 bei 210°C für 30 Minuten hatte eine geringe Verformung zur Folge, während Material 2 bei dieser Temperatur vollständig geschmolzen war.

**Tabelle 6: Erweichungstemperatur ermittelt mit TMA.**

| | Erweichungstemperatur (°C) |
|---|---|
| Material 1 | 160 |
| Material 2 | 220 |

### Beispiel 10

Die Mischung (a) wurde in einem Extruder mit genuteter Einzugszone, I/D 25-32, und einer Barriere-Mischteil-Schnecke deren Einzugsbereich auf Nuten abgestimmt war, in ein Elastollan® E 1195A zudosiert. Das vernetzte TPU zeigte ein höheres Niveau im Spannungs/Dehnungs Verhalten nach DIN 53504.

**Tabelle 7: Spannungs-Dehnungs-Werte bei Raumtemperatur**

| Zusatz an Isocyanat (a) in Gewichtsprozent bezogen auf den Extruderausstoß | Sigma 5 in MPa | Sigma 20 in MPa | Sigma 100 in MPa | Sigma 200 in MPa | Sigma 300 in MPa |
|---|---|---|---|---|---|
| 0 | 2.2 | 5.5 | 9.9 | 13.4 | 20.0 |
| 5 | 2.4 | 5.8 | 11.8 | 18.7 | 32.9 |

### Beispiel 11

Die Mischung (b) wurde in einem Extruder mit genuteter Einzugszone, I/D 25-32, und einer Barriere-Mischteil-Schnecke deren Einzugsbereich auf Nuten abgestimmt war, in ein Elastollan® E 1195A zudosiert. Der spezifische Durchgangswiderstand der erhaltenen Materialien wurde nach DIN IEC 60093 bestimmt. Das vernetzte TPU zeigte einen erhöhten spezifischen Durchgangswiderstand.

**Tabelle 8: Spezifischer Widerstand der vernetzten TPU.**

| Zusatz an Isocyanat (b) in Gewichtsprozent bezogen auf den Extruderausstoß | Ohm*cm | Bemerkung |
|---|---|---|
| 4 | 4,8E+11 | 2h Salz-Leitungswasser (1%) bei 70 °C |
| 6 | 6,2E+11 | 2h Salz-Leitungswasser (1 %) bei 70 °C |
| 0 | 9,5E+10 | 2h Salz-Leitungswasser (1%) bei 70 °C |

### Beispiel 12

Die Mischung (b) wurde in einem Extruder mit genuteter Einzugszone, I/D 25-32, und einer Barriere-Mischteil-Schnecke deren Einzugsbereich auf Nuten abgestimmt war, in ein Elastollan® EC 78A zudosiert. Das Material wurde in Xylol gelagert und dann das Gewicht nach Quellung im Verhältnis zum Ausgangsgewicht in Prozent bestimmt. Für die vernetzten Materialien wurde eine geringere Quellung beobachtet.

**Tabelle 9: Quellverhalten von vernetztem Elastollan® EC 78A.**

| Quellzeit in h | Gewichtsprozent Isocyanat (b) zudosiert | | |
|---|---|---|---|
| | 0 | 4 | 8 |
| 0,5 | 147,31 | 123,58 | 122,62 |
| 1 | 166,75 | 133,57 | 129,58 |
| 2 | 176,38 | 142,88 | 136,59 |
| 3 | 179,72 | 143,79 | 139,62 |
| 4 | 181,08 | 145,11 | 139,35 |
| 5 | 180,21 | 144,39 | 140,39 |
| 8 | 180,79 | 145,07 | 140,74 |

### Beispiel 13

Die Mischung (b) wurde in einem Extruder mit genuteter Einzugszone, I/D 25-32, und einer Barriere-Mischteil-Schnecke deren Einzugsbereich auf Nuten abgestimmt war, in ein Elastollan® E 1195A zudosiert. Das Material wurde in Xylol gelagert und dann das Gewicht nach Quellung im Verhältnis zum Ausgangsgewicht in Prozent bestimmt. Für die vernetzten Materialien wurde eine geringere Quellung beobachtet.

**Tabelle 9: Quellverhalten von vernetztem Elastollan® E 1195A.**

| Quellzeit in h | Gewichtsprozent Isocyanat zudosiert | | |
|---|---|---|---|
| | 0 | 4 | 8 |
| 0,5 | 126,44 | 115,48 | 113,72 |
| 1 | 142,34 | 124,25 | 120,18 |
| 2 | 150,43 | 133,87 | 128,08 |
| 3 | 151,84 | 136,45 | 131,08 |
| 4 | 151,40 | 138,50 | 132,53 |
| 5 | 151,91 | 138,72 | 133,02 |
| 8 | 151,58 | 138,50 | 134,61 |

### Beispiel 14

Die Mischung (a) wurde in einem Extruder mit genuteter Einzugszone, I/D 25-32, und einer Barriere-Mischteil-Schnecke deren Einzugsbereich auf Nuten abgestimmt war, in ein Elastollan® EC 78A zudosiert. Es wurden die folgenden mechanischen Eigenschaften gemessen.

| Zusatz an Isocyanat (b) in Gewichtsprozent | E-Modul | Shore A | Zugfestigkeit inMPa | Reißdehnung in % | Zugverformungsrest in % |
|---|---|---|---|---|---|
| 0 | 17 | 78 | 54 | 570 | 8 |
| 6 | 18 | 80 | 54 | 390 | 2 |

Das vernetzte TPU zeigte einen geringeren Zugverformungsrest.

### Beispiel 15

Die Mischung (b) wurde in einem Extruder mit genuteter Einzugszone, I/D 25-32, und einer Barriere-Mischteil-Schnecke deren Einzugsbereich auf Nuten abgestimmt war, in ein Elastollan® E 1195A zudosiert.

Im Vergleich mit einem Standard material Elastollan® E 1195A wurde für das vernetzte Material eine höhere Kriechbeständigkeit bestimmt nach DIN EN ISO 899 gefunden.

## Patentansprüche

1. Verfahren zur Umsetzung von (i) thermoplastischen Polyurethanen mit (ii) Isocyanatgruppen aufweisenden Verbindungen, **dadurch gekennzeichnet, dass** man als (ii) Isocyanatgruppen aufweisende Verbindungen (iia) Verbindungen mit mindestens drei Isocyanatgruppen auf der Basis von aliphatischen Isocyanaten und (iib) Verbindungen mit zwei Isocyanatgruppen auf der Basis von aromatischen Isocyanaten einsetzt.

2. Verfahren nach Anspruch 1, **dadurch gekennzeichnet, dass** man als (iia) ein Isocyanurat mit drei Isocyanatgruppen einsetzt.

3. Verfahren nach Anspruch 1, **dadurch gekennzeichnet, dass** man als (iia) ein Isocyanurat mit einem NCO-Gehalt zwischen 20 % und 25 % und einer Viskosität bei 23°C zwischen 2500 mPas und 4000 mPas einsetzt.

4. Verfahren nach Anspruch 1, **dadurch gekennzeichnet, dass** man als (iib) MDI, ein Carbodiimid-modifiziertes 2,2'-, 2,4'- und/oder 4,4'-Diphenylmethandiisoyanat (MDI) und/oder ein Prepolymer auf der Basis von 2,2'-, 2,4'- und/oder 4,4'-Dihenylmethandiisocyanat (MDI) einsetzt.

5. Verfahren nach Anspruch 1, **dadurch gekennzeichnet, dass** man als (iib) ein Prepolymer auf der Basis von 2,2'-, 2,4'- und/oder 4,4'-Diphenylmethandiisoyanat MDI), Alkandiol mit einem Molekulargewicht zwischen 60 g/mol und 400 g/mol und Polyetherdiol mit einem Molekulargewicht zwischen 500 g/mol und 4000 g/mol einsetzt.

6. Verfahren nach Anspruch 5, **dadurch gekennzeichnet, dass** das Prepolymer eine Viskosität bei 25°C zwischen 500 mPas und 800 mPas und einen NCO-Gehalt zwischen 20 % und 25 % aufweist.

7. Verfahren nach einem der Ansprüche 1 bis 6, **dadurch gekennzeichnet, dass** man (iia) und (iib) in einem Gewichtsverhältnis (iia): (iib) zwischen 1 : 1 und 1 : 10 einsetzt.

8. Verfahren nach Anspruch 1, **dadurch gekennzeichnet, dass** man pro 100 Gew.-Teilen (i) thermoplastisches Polyurethan zwischen 1 und 10 Gew.-Teile (ii) Isoyanatgruppen aufweisende Verbindungen einsetzt.

9. Verfahren nach Anspruch 1, **dadurch gekennzeichnet, dass** man das bevorzugt granulierte (i) thermoplastische Polyurethan in einem Extruder schmilzt und in geschmolzenem Zustand mit (ii) Isocyanatgruppen aufweisenden Verbindungen mischt und zur Reaktion bringt.

10. Verfahren nach Anspruch 9, **dadurch gekennzeichnet, dass** man (i) granuliertes thermoplastisches Polyurethan zusammen mit (ii) Isocyanatgruppen aufweisenden Verbindungen durch eine Einzugshilfe in den Extruder einführt.

11. Verfahren nach Anspruch 9, **dadurch gekennzeichnet, dass** der Extruder eine Barriereschnecke aufweist.

12. Polyisocyanat-Polyadditionsprodukte erhältlich durch ein Verfahren gemäß einem der Ansprüche 1 bis 11.

## Claims

1. A process for reacting (i) thermoplastic polyurethanes with (ii) compounds having isocyanate groups, wherein the (ii) compounds used having isocyanate groups comprise (iia) compounds having at least three isocyanate groups based on aliphatic isocyanates and (iib) compounds having two isocyanate groups based on aromatic isocyanates.

2. The process according to claim 1, wherein an isocyanurate having three isocyanate groups is used as (iia).

3. The process according to claim 1, wherein an isocyanurate with an NCO content of from 20% to 25% and with a viscosity at 23°C of from 2500 mPas to 4000 mPas is used as (iia).

4. The process according to claim 1, wherein MDI, a carbodiimide-modified diphenylmethane 2,2'-, 2,4'-and/or 4,4'-diisocyanate (MDI), and/or a prepolymer based on diphenylmethane 2,2'-, 2,4'- and/or 4,4'-diisocyanate (MDI) is/are used as (iib).

5. The process according to claim 1, wherein a prepolymer based on diphenylmethane 2,2'-, 2,4'-and/or 4,4'-diisocyanate (MDI), alkanediol with a molar mass of from 60 g/mol to 400 g/mol, and polyetherdiol with a molar mass of from 500 g/mol to 4000 g/mol is/are used as (iib).

6. The process according to claim 5, wherein the prepolymer has a viscosity at 25°C of from 500 mPas to 800 mPas and an NCO content of from 20% to 25%.

7. The process according to any of claims 1 to 6, wherein the ratio by weight (iia):(iib) at which (iia) and (iib) are used is from 1:1 to 1:10.

8. The process according to claim 1, wherein from 1 to 10 parts by weight of (ii) compounds having isocyanate groups are used per 100 parts by weight of (i) thermoplastic polyurethane.

9. The process according to claim 1, wherein the preferably granulated (i) thermoplastic polyurethane is melted in an extruder and in the molten state is mixed with (ii) compounds having isocyanate groups, and reacted.

10. The process according to claim 9, wherein (i) granulated thermoplastic polyurethane is introduced together with (ii) compounds having isocyanate groups by way of a feeding aid into the extruder.

11. The process according to claim 9, wherein the extruder has a barrier screw.

12. A polyisocyanate polyaddition product obtainable by way of a process according to any of claims 1 to 11.

## Revendications

1. Procédé pour la mise en réaction de (i) polyuréthanes thermoplastiques avec (ii) des composés comportant des groupes isocyanate, **caractérisé en ce qu'**on utilise comme (ii) composés comportant de groupes isocyanate (iia) des composés comportant au moins trois groupes isocyanate, à base d'isocyanates aliphatiques, et (iib) des composés comportant deux groupes isocyanate, à base d'isocyanates aromatiques.

2. Procédé selon la revendication 1, **caractérisé en ce qu'**on utilise en tant que (iia) un isocyanurate comportant trois groupes isocyanate.

3. Procédé selon la revendication 1, **caractérisé en ce qu'**on utilise en tant que (iia) un isocyanurate ayant une teneur en NCO comprise entre 20 % et 25 % et une viscosité à 23 °C comprise entre 2 500 mPa.s et 4 000 mPa.s.

4. Procédé selon la revendication 1, **caractérisé en ce qu'**on utilise en tant que (iib) le MDI, un 2,2'-, 2,4'- et/ou 4,4'-diphénylméthanediisocyanate (MDI) modifié avec un carbodiimide et/ou un prépolymère à base de 2,2'-, 2,4'- et/ou 4,4'-diphénylméthanediisocyanate (MDI).

5. Procédé selon la revendication 1, **caractérisé en ce qu'**on utilise en tant que (iib) un prépolymère à base de 2,2'-, 2,4'- et/ou 4,4'-diphénylméthanediisocyanate (MDI), d'alcanediol ayant une masse moléculaire comprise entre 60 g/mole et 400 g/mole et de polyétherdiol ayant une masse moléculaire comprise entre 500 g/mole et 4 000 g/mole.

6. Procédé selon la revendication 5, **caractérisé en ce que** le prépolymère présente une viscosité à 25 °C comprise entre 500 mPa.s et 800 mPa.s et une teneur en NCO comprise entre 20 % et 25 %.

7. Procédé selon l'une quelconque des revendications 1 à 6, **caractérisé en ce qu'**on utilise (iia) et (iib) en un rapport pondéral (iia) : (iib) compris entre 1 : 1 et 1 : 10.

8. Procédé selon la revendication 1, **caractérisé en ce que** pour 100 parties en poids de (i) polyuréthane thermoplastique on utilise entre 1 et 10 parties en poids de (ii) composés comportant des groupes isocyanate.

9. Procédé selon la revendication 1, **caractérisé en ce qu'**on fait fondre dans une extrudeuse le (i) polyuréthane thermoplastique de préférence granulé et, à l'état fondu, on le mélange et le met en réaction avec (ii) des composés comportant des groupes isocyanate.

10. Procédé selon la revendication 9, **caractérisé en ce qu'**on introduit dans l'extrudeuse, à l'aide d'un moyen auxiliaire d'alimentation, (i) le polyuréthane thermoplastique granulé avec (ii) des composés comportant des groupes isocyanate.

11. Procédé selon la revendication 9, **caractérisé en ce que** l'extrudeuse comporte une vis barrière.

12. Produits de polyaddition polyisocyanate, pouvant être obtenus par un procédé selon l'une quelconque des revendications 1 à 11.
